# EUROPEAN PATENT SPECIFICATION

(11) **EP 3 104 355 B1**
(45) Date of publication and mention of the grant of the patent: **08.01.2020**
(21) Application number: 14881646.5
(22) Date of filing: 13.11.2014
(51) Int. Cl.: G08G 1/00, B60L 15/20, B61L 27/00, B60L 1/00, B61L 3/00, B61L 15/00, B61L 23/22, B61L 25/02, G05D 1/00, G05D 1/02, B60L 50/61

(54) **WORK VEHICLE CONTROL SYSTEM**
ARBEITSFAHRZEUGSTEUERUNGSVORRICHTUNG
SYSTÈME DE COMMANDE D'ENGIN DE CHANTIER

(30) Priority: 05.02.2014 JP 2014020584
(43) Date of publication of application: 14.12.2016
(73) Proprietor: Hitachi Construction Machinery Co., Ltd., Bunkyo-ku Tokyo 112-8563 (JP)
(72) Inventor: YAMASAKI, Ryota, Tokyo 100-8280 (JP); OOKURA, Yoshinori, Tokyo 100-8280 (JP); HAMADA, Tomoyuki, Tsuchiura-shi Ibaraki 300-0013 (JP); YAMADA, Tsutomu, Tokyo 100-8280 (JP)
(74) Representative: Manitz Finsterwald Patent- und Rechtsanwaltspartnerschaft mbB
(86) International application number: PCT/JP2014/080105
(87) International publication number: WO 2015/118745

(56) References cited:
- DE-T5-112012 001 799
- JP-A- H1 076 951
- JP-A- 2004 098 852
- JP-A- 2012 035 813
- JP-A- 2012 131 324
- US-A1- 2011 018 701

## Description

### TECHNICAL FIELD:

The present invention relates to a control system for a work vehicle, such as a dump truck, used in a mine, for example.

### BACKGROUND ART:

Unmanned vehicles capable of autonomous-traveling have been introduced as dump trucks used in a mine these days. For this type of unmanned vehicles, a block control is performed from a viewpoint of collision avoidance or the like. In the block control, a travel path in a mine is sectioned into a plurality of block sections in advance. During travel in a predetermined one of the block sections, travel permission for a next block section located ahead of this block section is requested to a control center via wireless communication, and travel to the second block section is continuously performed only in the case where the travel permission is acquired.

An example of a known conventional technique related to this type of block control is an information management method described in Patent Literature 1. According to a train-existing-information management method described in Patent Literature 1, when a train enters to a predetermined block section, information including the presence or absence of an existing train is created on an on-vehicle device based on position information of the block period. An information transfer process is performed in which the information created on the on-vehicle device is transmitted from an ATC (Automatic Train Control) device of a main system provided in the predetermined block section to ATC devices respectively provided in block sections ahead of and behind the predetermined block section simultaneously; This information transfer process is sequentially repeated by each ATC device provided in each of the block sections, and the train-existing information is held in the ATC devices of adjacent block sections. In this manner, even when a partial device failure or a power cut occurs, the train-existing information in each block section is surely held, so that the train is allowed to travel safely.

### CITATION LIST

### PATENT LITERATURE

Patent Literature 1: Japanese Patent No. 4757245

US 2011/0018701 A1 discloses a traffic light passing support system and a related in-vehicle apparatus and method. An in-vehicle arithmetic unit calculates a required time which is needed for a vehicle to arrive at a traffic light when the vehicle maintains a present speed, according to a speed of the vehicle, a present position of the vehicle, and information on the traffic light. An in-vehicle determination unit determines Whether the vehicle can pass the traffic light by maintaining the present speed, according to the required time and the traffic light information. An in-vehicle generating unit generates a request signal to request the traffic light to light a passing permission color such as a blue light after the required time elapses, in response to a determination that the vehicle cannot pass the traffic light. An in-vehicle transmission unit transmits the request signal to the traffic light. A control unit of the traffic light controls the signal light according to the transmitted request signal.

### TECHNICAL PROBLEM:

The conventional technique disclosed in Patent Literature 1 merely transmits, for every predetermined block section, information on the adjacent block sections ahead of and behind that predetermined block section, but does not take any action in accordance with a travel position of the train in a specific block section nor considers the transmission amount of information. Further, the information on the predetermined block section is created based on the position information of that block section when the train enters to that block section. Therefore, communication of information during travel in the block section is not considered.

### SUMMARY OF INVENTION

The present invention has been made in view of circumstances of the above-described conventional technique, and aims to provide a work vehicle control system that can take an action in accordance with a travel position in a block section.

### SOLUT ION TO PROBLEM:

The above object is accomplished with the features of the independent claims.

A work vehicle control system comprises the features of claims 1 and 4. It comprises a work vehicle that includes: an on-board controller; a communication unit capable of performing communication; a position detection unit for detecting a travel position of a vehicle body with the on-board controller mounted thereon; a permission request unit for transmitting, while the vehicle body travels in a predetermined first block section of a travel path on which the vehicle body is to travel, a travel permission request signal for requesting a travel permission signal that permits travel in a second block section located ahead of the first block section via the communication unit; and a control unit for changing a frequency of transmission of the travel permission request signal by the permission request unit in accordance with a distance or a required time to a predetermined position located in the first block section ahead of the vehicle body when it is determined based on the travel position detected by the position detection unit that the vehicle body is traveling in the first block section, and a control center for transmitting/receiving predetermined information to/from a plurality of the work vehicles and controlling travel of the work vehicles.
invention control unit thus configured changes a frequency of a request for the travel permission signal by the permission request unit in accordance with the distance or the required time to the predetermined position located in the first block section ahead of the vehicle body, when it is determined based on the travel position detected by the position detection unit that the vehicle body is traveling in the first block section. By doing this, it is possible to deal with the request for the travel permission signal in accordance with the travel position in the first block section. Further, the transmission amount of information associated with the request for the travel permission signal can be reduced by increasing the transmission frequency of the travel permission request signal at the time of a request start in the first block section and stopping transmission of the travel permission request signal in accordance with the reception of the travel permission signal, for example.

Also, the work vehicle includes a braking device for braking travel of the vehicle body, and the transmission frequency of the travel permission request signal is determined in accordance with a braking distance from where travel of the vehicle body is braked by the braking device to where the vehicle body is stopped.

The device thus configured determines the transmission frequency of the travel permission request signal in accordance with the braking distance from where travel of the vehicle body is braked by the braking device to where the vehicle body is stopped, so that the vehicle body can be surely braked and stopped by the braking device before the predetermined position in the first block section in the case where the travel permission signal cannot be acquired, for example.

A work vehicle not falling under claim 1 includes: an on-board controller; a travel control unit for controlling travel of a vehicle body with the on-board controller mounted thereon; a communication unit capable of performing communication; a position detection unit for detecting a travel position of the vehicle body; a permission request unit for transmitting, while the vehicle body travels in a predetermined first block section of a travel path on which the vehicle body is to travel, a travel permission request signal for requesting a travel permission signal that permits travel in a second block section located ahead of the first block section via the communication unit; and a control unit for changing a travel speed of the vehicle body via the travel control unit in accordance with a distance or a required time to a predetermined position located in the first block section ahead of the vehicle body when it is determined based on the travel position detected by the position detection unit that the vehicle body is traveling in the first block section, and a control center for transmitting/receiving predetermined information to/from a plurality of the work vehicles and controlling travel of the work vehicles.

The device thus configured changes the travel speed of the vehicle body in accordance with the distance or the required time to the predetermined position located in the first block section ahead of the vehicle body, while the vehicle body travels in the first block section. By doing this, it is possible to deal with the request for the travel permission signal in accordance with the travel position in the first block section. Further, the transmission amount of information associated with the request for the travel permission signal can be reduced by gradually lowering the travel speed of the vehicle body in accordance with the distance or the required time to the predetermined position in the first block section and stopping transmission of the travel permission request signal in accordance with the reception for the travel permission signal, for example.

The work vehicle includes a braking device that brakes travel of the vehicle body, and a change of the travel speed is determined in accordance with a braking distance from where travel of the vehicle body is braked by the braking device to where the vehicle body is stopped.

The device thus configured determines the change of the travel speed in accordance with the braking distance from where travel of the vehicle body is braked by the braking device to where the vehicle body is stopped, so that the vehicle body can be surely braked and stopped by the braking device before the predetermined position in the first block section in the case where the travel permission signal cannot be acquired, for example.

A further work vehicle includes: an on-board controller; a communication unit capable of performing communication; a position detection unit for detecting a travel position of a vehicle body with the on-board controller mounted thereon; a permission request unit for transmitting, while the vehicle body travels in a predetermined first block section of a travel path on which the vehicle body is to travel, a travel permission request signal for requesting a travel permission signal that permits travel in a second block section located ahead of the first block section via the communication unit; a permission signal acquisition unit for receiving the travel permission signal via the communication unit; a memory for storing map information including the travel path on which the vehicle body is to travel; and a control unit for calculating, in the case where the travel permission signal has been received in the permission signal acquisition unit, a travel position of the vehicle body at a time of transmission of the travel permission request signal for which the travel permission signal has been received based on the travel position detected by the position detection unit and the map information, and transmitting the travel permission request signal by the permission request unit when the vehicle body travels at the calculated travel position, and a control center for transmitting/receiving predetermined information to/from a plurality of the work vehicles and controlling travel of the work vehicles.

The device thus configured calculates the travel position of the vehicle body at the time of transmission of the travel permission request signal for which the travel permission signal has been able to be acquired, and transmits the travel permission request signal when the vehicle body travels at this travel position. Therefore, it is possible to receive the travel permission signal surely, and take an action in accordance with the travel position in the block section. Furthermore, the transmission amount of information associated with the request for the travel permission signal can be reduced by stopping transmission of the travel permission request signal in accordance with reception of the travel permission signal, for example.

### ADVANTAGEOUS EFFECTS OF INVENTION

According to the present invention, it is possible to deal with a request for a travel permission signal in accordance with a travel position in a block section. Problems, configurations, and advantageous effects other than the above will be apparent by the following description of embodiments.

### BRIEF DESCRIPTION OF DRAWINGS:

FIG. 1 is a schematic diagram illustrating a mine for which a control system according to a first embodiment of the present invention is used.
FIG. 2 is a schematic diagram illustrating a work vehicle used in the above control system.
FIG. 3 is a schematic configuration diagram illustrating a travel driving device of the above work vehicle.
FIG. 4 is a schematic configuration diagram illustrating a relation between the above work vehicle and a control center.
FIG. 5 illustrates a block section determined in a travel path of the above work vehicle.
FIG. 6 illustrates communication between the above work vehicle and the control center.
FIG. 7 is a flowchart of a travel permission request method in the above work vehicle.
FIG. 8 illustrates communication between a work vehicle and a control center in a control system according to a second embodiment of the present invention.
FIG. 9 is a schematic configuration diagram illustrating a work vehicle used in a control system according to a third embodiment of the present invention.
[Fig. 10] FIG. 10 is a graph showing a transmission frequency with respect to a remaining time until a work vehicle reaches a predetermined position in a block section in a control system according to a fourth embodiment of the present invention.
[Fig. 11] FIG. 11 illustrates communication between a work vehicle and a control center in a control system according to a fifth embodiment of the present invention.

### DESCRIPTION OF EMBODIMENTS:

Embodiments of a work vehicle control system according to the present invention are described below, referring to the drawings.

### [First Embodiment]

This first embodiment is an embodiment in which, while a dump truck 1 for a mine, which is an example of a work vehicle, travels in a predetermined block section P1 determined in advance in a carrying area A where the dump truck 1 is to travel, a frequency of a travel permission request to a control center 11, for requesting travel permission for a next block section P2 located ahead of the block section P1, is changed in accordance with a travel position in the block position P1.

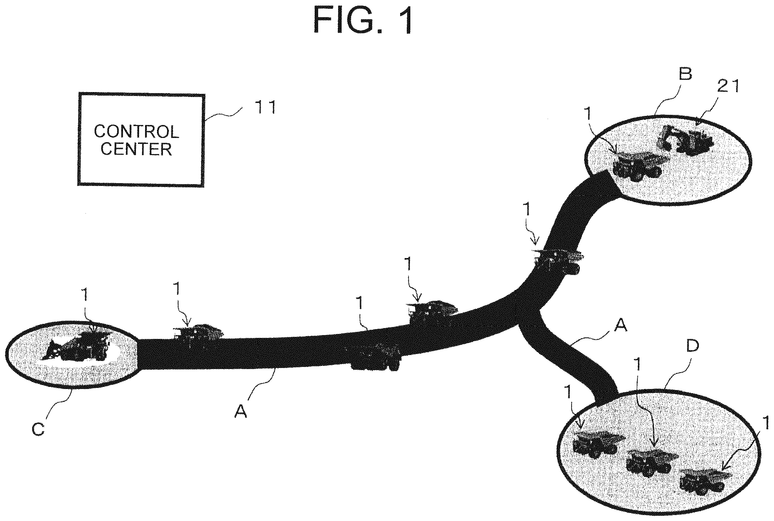

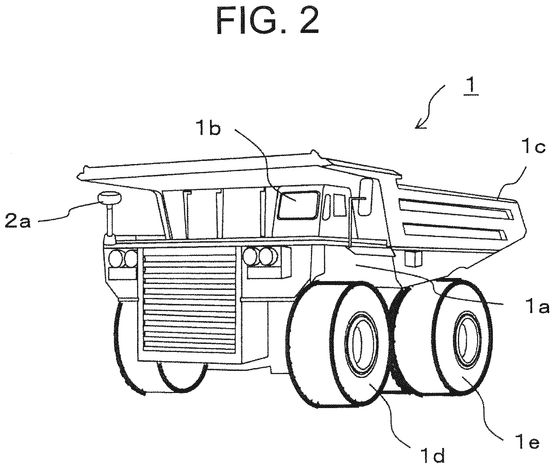

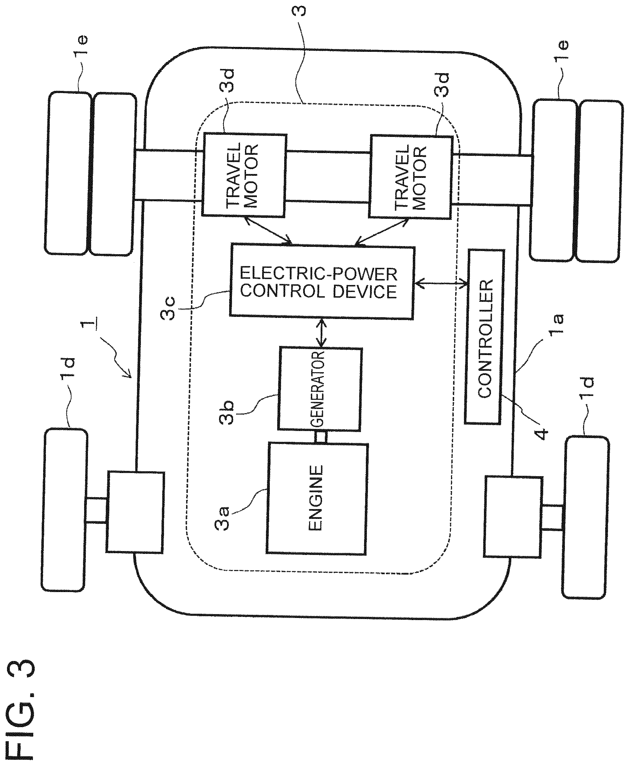

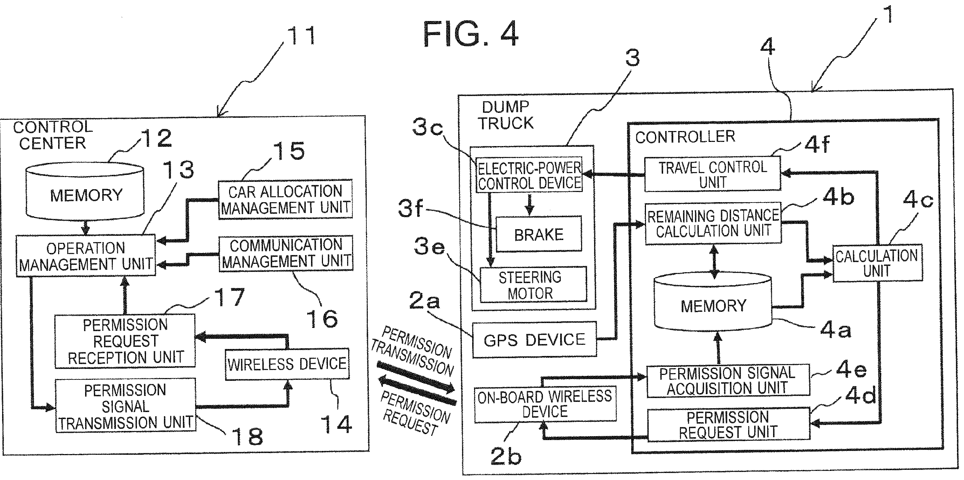

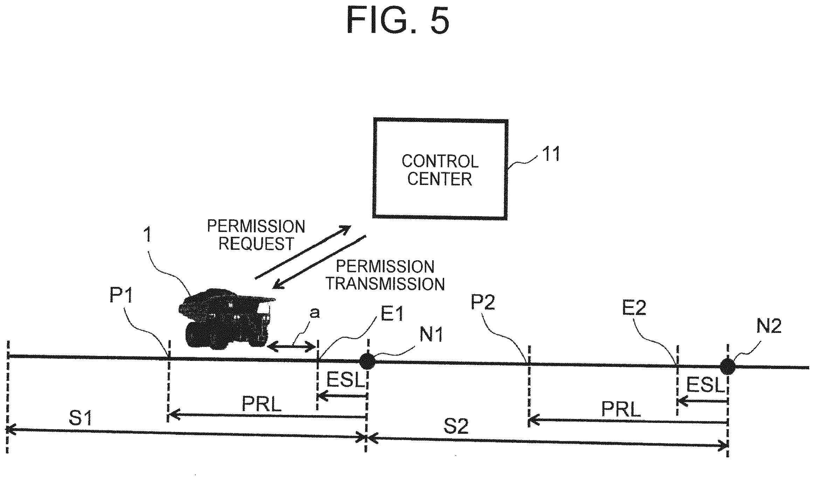

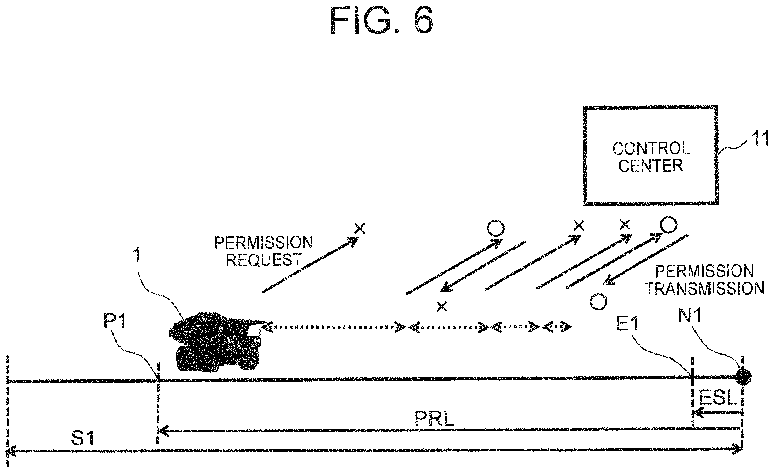

FIG. 1 is a schematic diagram illustrating a mine where a control system according to the first embodiment of the present invention is used. FIG. 2 is a schematic diagram illustrating the dump truck 1 used in the control system. FIG. 3 is a schematic configuration diagram illustrating a travel driving device 3 of the dump truck 1. FIG. 4 is a schematic configuration diagram illustrating a relation between the dump truck 1 and the control center 11. FIG. 5 illustrates block sections determined in the carrying area A of the dump truck 1. FIG. 6 illustrates communication between the dump truck 1 and the control center 11.

The dump truck 1 is an unmanned traveling vehicle capable of traveling autonomously in the carrying area A, which is a travel path in the mine, for example, as illustrated in FIG. 1. In the mine are provided a loading area B where the dump truck 1 is loaded with soil or the like by a shovel 21 or the like, a dumping area C where the load loaded in the loading area B is dumped, and a parking area D where the dump truck 1 is parked when maintenance or the like is performed. These areas B to D are connected by the carrying areas A. In the mine, the control center 11 is installed, which transmits/receives predetermined information to/from the dump truck 1 to perform travel control, for example, travel control of a plurality of dump trucks 1.

As illustrated in FIG. 2, the dump truck 1 includes a vehicle body 1a, a driver's seat 1b provided in an upper front portion of the vehicle body 1a, a vessel 1c provided on the vehicle body 1a to be capable of rising up and falling down, a hoist cylinder (not shown) for moving the vessel 1c up and down, and right and left front wheels 1d and rear wheels 1e supporting the vehicle body 1a such that the vehicle body 1a can travel.

The dump truck 1 also includes the travel driving device 3, as illustrated in FIG. 3. The travel driving device 3 includes an engine 3a, a generator 3b driven by the engine 3a, an electric-power control device 3c to which an electric power generated by the generator 3b is supplied, and a travel motor 3d for driving the rear wheels 1e. An electric power supplied to the driving motor 3d is controlled by the electric-power control device 3c. The electric-power control device 3c is controlled by a controller 4 mounted on the dump truck 1. The controller 4 is an on-vehicle controller that controls driving of a steering motor 3e, which is a steering device for steering the vehicle body 1a, and driving of a brake 3f, which is a braking device for braking the vehicle body 1a, e.g., a retarder brake, via the electric-power control device 3c, as illustrated in FIG. 4, for example.

The vehicle body 1a has a GPS device 2a attached to a front corner of the vehicle body 1a, as illustrated in FIGS. 2 and 4. The GPS device 2a is a position detection unit for detecting a travel position of the vehicle body 1a. Also, an on-board wireless device 2b is mounted on the vehicle body 1a, which is a communication unit capable of performing communication with the control center 11 for wirelessly transmitting predetermined signals.

The controller 4 includes a memory 4a in which map information related to the carrying area A where the dump truck 1 is to travel is stored in advance. In addition to the map information, the memory 4a stores travel-permission section information related to each block section S1, S2, ..., Sn in the carrying area A. As illustrated in FIG. 5, the travel-permission section information includes an emergency stop point E1, E2, ..., En, which is a predetermined position back from a termination point N1, N2, ..., Nn of each block section S1, S2, ..., Sn by an emergency stop distance ESL during which travel of the vehicle body 1a can be braked and stopped by the brake 3f, wherein the block sections S1, S2, ..., Sn are a plurality of permission sections obtained by sectioning each carrying area A at predetermined intervals on a line. The travel-permission section information also includes a permission request start point P1, P2, ..., Pn back from the termination points N1, N2, ..., Nn of each first block section S1, S2, ..., Sn by a travel permission request distance PRL for requesting travel permission for next second block sections S2, S3, ..., Sn located ahead of the first block sections S1, S2, ..., Sn-1, for example.

The controller 4 includes a remaining distance calculation unit 4b that calculates a remaining distance a in the block section S1, S2, ..., Sn, a calculation unit 4c, which is a control unit, for calculating an interval of transmitting a travel permission request signal, a permission request unit 4d causing the travel permission request signal to be output, a permission signal acquisition unit 4e to which the received travel permission signal is input, and a travel control unit 4f for controlling travel of the vehicle body 1a. To the remaining distance calculation unit 4b is input travel position information of the vehicle body 1a detected by the GPS device 2a. The remaining distance calculation unit 4b refers to the travel position information input thereto and the travel-permission section information stored in the memory 4a, for example, and calculates from the travel position in the travel position information a remaining distance a to the emergency stop point E1 in the block section S1 to which this travel position belongs, for example.

The remaining distance information calculated in the remaining distance calculation unit 4b is input to the calculation unit 4c. The calculation unit 4c is a transmission interval calculation unit that calculates a transmission interval (transmission timings) of transmitting the travel permission request signal based on a request frequency table predetermined in accordance with the remaining distance a. The calculation unit 4c generates the travel permission request signal to be output to the permission request unit 4d. The travel permission request signal is a signal requesting travel permission for the next block section S2 located ahead of the travel position detected by the GPS device 2a. The travel permission request signal includes information on the block section in which the dump truck 1 is currently traveling, in the remaining distance information input from the remaining distance calculation unit 4b, and also includes permission request information requesting the travel permission for the next block section S2 located ahead of the block section S1, identification information for identifying the dump truck 1 that is a transmission source of the travel permission request signal, and the like.

The request frequency table is set in such a manner that the transmission interval becomes shorter as the remaining distance a from the travel position to the emergency stop point E1, E2, ..., En in each block section S1, S2, ..., Sn decreases. As illustrated in FIG. 6, according to the request frequency table, the first transmission is performed at the time of passing through the permission request start point P1, the second transmission is performed when the remaining distance a becomes a half of a predetermined distance (a threshold value) obtained by subtracting the emergency stop distance ESL from the travel permission request distance PRL, and the third, fourth, fifth, sixth, seventh,... transmissions are performed sequentially when the remaining distance a decreases by half, i.e., the remaining distance a becomes 1/4, 1/8, 1/16, 1/32, 1/64, ..., of the threshold value. That is, the transmission frequency is increased by reducing the transmission interval in proportional to the decrease of the remaining distance a. In other words, according to the request frequency table, the request frequency of transmitting the travel permission request signal is set in accordance with the remaining distance a obtained by subtracting the emergency stop distance ESL.

To the permission request unit 4d are input the transmission interval information calculated in the calculation unit 4c and the travel permission request signal information. The permission request unit 4d transmits the travel permission request signal in the travel permission request signal information, from the on-board wireless device 2b to the control center 11 to achieve the transmission interval in the input transmission interval information. In other words, during travel in the block section S1, the permission request unit 4d transmits the travel permission request signal that permits travel in the block section S2 ahead of the block section S1, via the on-board wireless device 2b.

The permission signal acquisition unit 4e receives, via the on-board wireless device 2b, a travel permission signal transmitted back from the control center 11 in response to the travel permission request signal transmitted from the permission request unit 4d. The permission information acquisition unit 4e determines whether or not the identification information included in the received travel permission signal information is identification information assigned to its own dump truck 1. Only when having determined that the identification information included in the travel permission signal information is its own identification information, the permission information acquisition unit 4e stores the received travel permission signal information in the memory 4a.

The calculation unit 4c acquires the travel permission signal information stored in the memory 4a. When having been able to acquire the travel permission signal information, the calculation unit 4c stops the output of the transmission interval information to the permission request unit 4d, and stops transmission of the travel permission request signal from the permission request unit 4d via the on-board wireless device 2b. The calculation unit 4c also calculates the block section S2 located ahead, for which travel permission has been acquired by the received travel permission signal, based on the travel permission signal information and the travel-permission section information stored in the memory 4a. To the travel control unit 4f, the block section information calculated in the calculation unit 4c is input. The travel control unit 4f controls the generator 3b, the travel motor 3d, the brake 3f, the steering motor 3e, and the like via the electric-power control device 3c based on the input block section information to allow the dump truck 1 to continue to travel to the emergency stop point E2 in the block section S2 for which the travel permission has been acquired.

In the case where, during travel from the permission request start point P1 to the emergency stop point E1, the travel permission signal for permitting travel in the next block section S2 cannot be acquired in the permission information acquisition unit 4e, and the travel permission signal information cannot be acquired from the memory 4a, the calculation unit 4c outputs travel stop information for stopping travel of the vehicle body 1a. The travel control unit 4f stops travel of the vehicle body 1a by controlling the generator 3b, the travel motor 3d, the brake 3f, and the like via the electric-power control device 3c based on the input travel stop information.

The control center 11 includes a memory 12 in which map information of the mine, such as the carrying area A where each dump truck 1 is to travel, is stored in advance, an operation management unit 13 for managing an operation of each dump truck 1 based on the map information stored in the memory 12, and a wireless device 14 that transmits carrying information including a destination, a travel path, and/or a travel permission area, for example, created by the operation management 13 unit, to the on-board wireless device 2 of the dump truck 1. In addition to the map information, the memory 12 stores travel-permission section information related to each of block sections S1, S2, ..., Sn in the carrying area A.

To the operation management unit 13 are connected a car allocation management unit 15 that manages allocation of the dump trucks 1 and a traffic control unit 16 that controls traffic of all vehicles traveling in the mine. The operation management unit 13 performs comparison with a predetermined operation pattern, or the like based on the map information stored in the memory 12, car-allocation management information output from the car allocation management unit 15, and traffic control information output from the traffic control unit 16 to calculate an operation management of each dump truck 1, or the like, and wirelessly transmits carrying information for each dump truck 1 based on this operation management to the each dump truck 1. The electric-power control device 3c in each dump truck 1 is controlled via the travel control unit 4f in the controller 4 based on the carrying information received from the wireless device 14 of the control center 11, so that the dump truck 1 can travel autonomously.

The control center 11 includes a permission request reception unit 17 for receiving the travel permission request signal transmitted from the on-board wireless device 2 of the dump truck 1 via the wireless device 14, and a permission signal transmission unit 18 for transmitting from the wireless device 14 the travel permission signal in response to the travel permission request signal received from the dump truck 1. The permission request reception unit 17 outputs information on the travel permission request signal received via the wireless device 14, to the operation management unit 13. The operation management unit 13 refers to and applies the block section information included in the travel permission request information input thereto to the travel-permission section information stored in the memory 12, for example, to calculate the next block section S2. The operation management unit 13 checks traffic of another vehicle traveling around the block section S2 based on the car-allocation management information output from the car allocation management unit 15 and the traffic control information output from the traffic control unit 16, and determines whether to permit travel of the dump truck 1 belonging to the identification information in the travel permission request signal, in the block section 2.

The operation management unit 13 generates the travel permission signal to be output to the permission signal transmission unit 18, only when having determined that travel of the dump truck 1 belonging to the identification information in the travel permission request signal in the block section S2 is permitted. The travel permission signal includes the identification information of the dump truck 1 in the travel permission request signal and travel permission information that permits that dump truck 1 to travel in the next block section S2. The travel permission signal created by the operation management unit 13 is input to the permission signal transmission unit 18. The permission signal transmission unit 18 transmits the travel permission signal input thereto to the dump truck 1 via the wireless device 14.

### <Communication method>

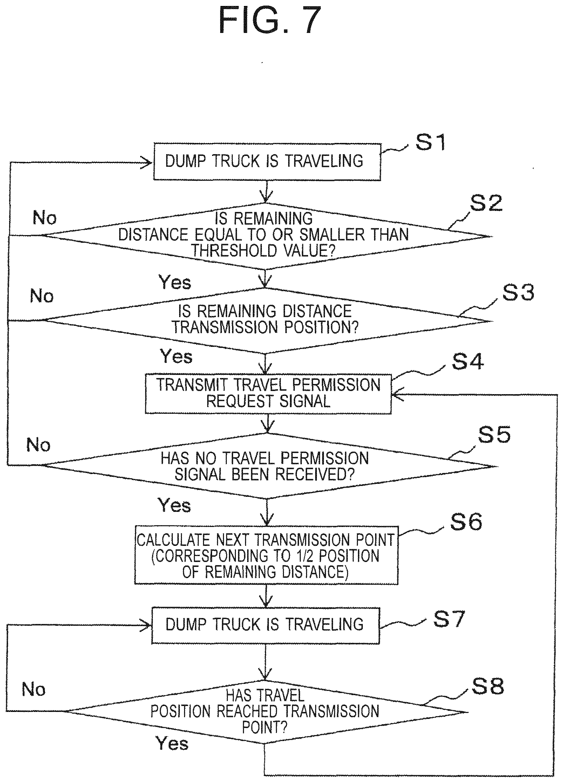

Next, a travel permission request method in the controller 4 of the dump truck 1 according to the first embodiment is described, referring to FIG. 7. FIG. 7 is a flowchart of the travel permission request method in the dump truck 1.

A travel position of the dump truck 1 is calculated in the remaining distance calculation unit 4b based on travel position information detected by the GPS device 2a (Step 1, hereinafter, described as S1, for example). Then, based on the travel position information detected by the GPS device 2a, travel-permission section information stored in the memory 4a is referred to, for example, so that from the travel position in the travel position information a remaining distance a to the emergency stop point E1 in the block section S1 to which that travel position belongs is calculated in the remaining distance calculation unit 4b. It is then determined whether the calculated remaining distance a is equal to or smaller than a predetermined distance (a threshold value) obtained by subtracting the emergency stop distance ESL from the travel permission request distance PRL of that block section S1 (S2).

When it is determined that the calculated remaining distance a is larger than the threshold value (S2/No), the flow returns to S1 described above. On the other hand, when it is determined that the calculated remaining distance a is the threshold value or less (S2/YES), it is then determined whether or not the remaining distance a is a distance at which a travel signal request signal is to be transmitted (S3). When it is determined that the remaining distance a is not the distance within which the travel permission request signal is to be transmitted (S3/No), the flow goes back to S1 described above. On the other hand, when it is determined that the remaining distance a is the distance within which the travel permission request signal is to be transmitted (S3/Yes), the travel permission request signal generated in the calculation unit 4c is transmitted from the permission request unit 4d via the on-board wireless device 2b (S4).

It is then determined whether or not a travel permission signal transmitted from the control center 11 in response to the travel permission request signal transmitted in S4 has been able to be received in the permission signal acquisition unit 4e (S5). When the travel permission signal has been able to be received (S5/NO), the flow returns to S1 described above. On the other hand, in the case of a communication error in which the travel permission signal cannot be received (S5/YES), a location corresponding to a half of the remaining distance a calculated in S2 described above is calculated as a transmission point of the next travel permission request signal (S6).

Subsequently, the travel position of the dump truck 1 is calculated again in the remaining distance calculation unit 4b based on travel position information detected by the GPS device 2a (S7), and it is determined whether or not the calculated travel position reaches the transmission point calculated in S6 described above (S8). When the calculated travel position has not reached the transmission point (S8/NO), the flow returns to S7 described above. On the other hand, when the calculated travel position has reached the transmission point (S8/Yes), the flow goes to S4 described above, and the travel permission request signal created in the calculation unit 4c is transmitted.

### <Operations and Effects>

In the above-described manner, the dump truck 1 used in the control system according to the above-described first embodiment is configured in such a manner that, while the dump truck 1 travels in the predetermined block section S1 in the carrying area A, the transmission frequency of transmitting the travel permission request signal for requesting travel permission for the next block section S2 to the control center 11 is increased as the remaining distance a from the travel position detected by the GPS device 2a to the emergency stop point E1 is reduced after the dump truck 1 passes through the permission request start point P1 in this block section S1.

With this configuration, it is possible to transmit the travel permission request signal in accordance with the travel position in each of the block sections S1, S2, ..., Sn. In addition, in the case where the travel permission signal transmitted from the control center 11 in response to the travel permission request signal has been able to be acquired in the permission signal acquisition unit 4e, transmission of the travel permission request signal for requesting travel permission for the next block section S2 is stopped, so that the number of transmissions of the travel permission request signal can be reduced and the transmission amount of information associated with transmissions of travel permission request signals can be reduced. Therefore, the transmission amount of information of each dump truck 1 managed in the mine can be reduced. This can eliminate a problem that the number of available packets in a wireless line bandwidth used for data transmission with each dump truck 1 is exhausted, for example. Thus, the number of the dump trucks 1 managed in the mine can be increased. Also, it is possible to transmit the travel permission request signal in accordance with the travel position in each block section S1, S2,..., Sn. This can lower probability of an emergency stop of the dump truck 1 in the case where the dump truck 1 cannot acquire the travel permission signal before reaching the emergency stop point E1.

In particular, a section within which the travel permission request signal is transmitted is set to be from the permission request starting point P1, P2, .., Pn to the emergency stop point E1, E2, ..., E2 in each block section S1, S2, ..., Sn, and is set to be a section obtained by subtracting the emergency stop distance ESL at which the vehicle body 1a can be braked by the brake 3f to stop from the travel permission request distance PRL. Therefore, even in the case where the dump truck 1 cannot receive the travel permission signal from the distance request start point P1 to the emergency stop point E1 in the predetermined block section S1 and therefore travel of the vehicle body 1a is stopped when the vehicle body 1a passes through the emergency stop point E1, it is possible to surely stop the vehicle body 1a before the vehicle body 1a reaches the termination point N1 of the block section S1.

In other words, by setting the emergency stop distance ESL in accordance with the braking performance of the brake 3f of the dump truck 1, it is possible to stop the dump truck 1 at a position before the termination point N1 of the block section S1 where the dump truck 1 is traveling even in the case where the dump truck 1 cannot receive the travel permission signal for the next block section S2. Also, it is possible to surely prevent entrance of the dump truck 1 to the block section S2 for which no travel permission can be acquired. Therefore, it is possible to surely prevent a contact with another dump truck 1 or the like that may be caused by entrance of the dump truck 1 to the block section S2 for which the travel permission signal has not been transmitted, and a damage of the dump truck 1 caused by entrance to the carrying area A that is broken.

### [Second Embodiment]

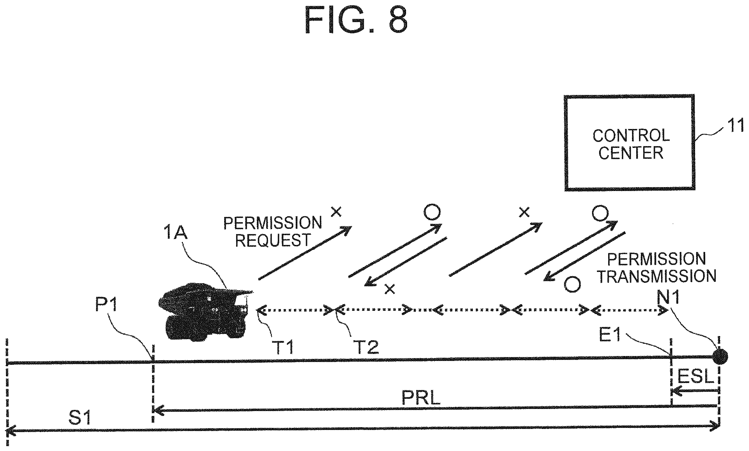

FIG. 8 illustrates communication between a dump truck 1A and the control center 11 in a control system according to a second embodiment of the present invention. This second embodiment is different from the aforementioned first embodiment in that the transmission frequency of transmitting the travel permission request signal is increased as the remaining distance a in the block section S1, S2, ..., Sn decreases in the first embodiment, whereas a travel speed of the dump truck 1 is reduced as the remaining distance a in the block section S1, S2, ..., Sn decreases in the second embodiment. In this second embodiment, portions which are the same as or corresponding to the portions in the first embodiment are labeled with the same reference signs.

### <Configuration>

In this second embodiment, the memory 4a stores transmission points T1, T2, ..., Tn obtained by dividing a distance from the permission request start point P1, P2, ..., Pn to the emergency stop point E1, E2, ..., En in each block section S1, S2, ..., Sn at regular intervals, as travel permission section information. The calculation unit 4c calculates arrival at the transmission points T1, T2, ..., Tn based on the remaining distance a in the block section S1 where the dump truck 1a is traveling by, for example, applying remaining distance information output from the remaining calculation unit 4b to the travel-permission section information stored in the memory 4a. The calculation unit 4c transmits a travel permission request signal from the permission request unit 4d via the on-board wireless device 2b every time the vehicle body 1a arrives at the transmission point T1, T2, ..., Tn.

In the case where, before a predetermined time, for example, several seconds passes after transmission of the travel permission request signal from the permission request unit 4d at arrival at the predetermined transmission point T1, a travel permission signal cannot be received in the permission signal acquisition unit 4e and travel permission signal information cannot be acquired from the memory 4a, the calculation unit 4c controls the generator 3b, the travel motor 3d, and the brake 3f, for example, via the electric-power control device 3c to lower the travel speed of the vehicle body 1a by a predetermined rate determined in advance. In other words, the calculation unit 4c causes the travel permission request signal to be transmitted every time the dump truck 1A arrives at the transmission points T1, T2, ..., Tn, and continues to lower the travel speed of the vehicle body 1a by the predetermined rate every time no travel permission signal can be received in response to the transmitted travel permission request signal, to decelerate the vehicle body 1a.

### <Operations and Effects>

In the above-described manner, the dump truck 1A used in the control system according to the second embodiment is configured as follows. The transmission points T1, T2, ..., Tn are set by dividing the distance from the permission request start point P1, P2, ..., Pn to the emergency stop point E1, E2, ..., En in each block section S1, S2, ..., Sn at regular intervals, and the dump truck 1A transmits the travel permission request signal for every arrival at the transmission point T1, T2, ..., Tn. In the case where no travel permission signal can be received before the predetermined time passes after transmission of the travel permission request signal at each arrival of the transmission point T1, T2, ..., Tn, the travel speed of the vehicle body 1a is lowered at the predetermined rate to decelerate the vehicle body 1a.

Therefore, it is possible to transmit the travel permission request signal in accordance with the travel position in each block section S1, S2, ..., Sn. In addition, in the case where the travel permission signal could be acquired, transmission of the travel permission request signal is stopped, so that the number of transmissions of the travel permission request signal can be reduced. Thus, the transmission amount of information associated with transmissions of travel permission request signals can be reduced. Further, every time the dump truck 1A could not acquire the travel permission signal, the travel speed of the vehicle body 1a is decelerated. Therefore, even in the case where travel of the dump truck 1 is stopped at the emergency stop point E1, E2, ..., En, for example, it is possible to stop the dump truck 1 within a shorter distance. This can reduce wear of a part of the brake 3f, for example. Also, the emergency stop distance ESL in each block section S1, S2, ..., Sn can be made shorter and the distance from the permission request start point P1, P2, ..., Pn to the emergency stop point E1, E2, ..., En can be made larger. Therefore, possibility of receiving the travel permission signal before the emergency stop point E1, E2, ..., En can be increased.

### [Third Embodiment]

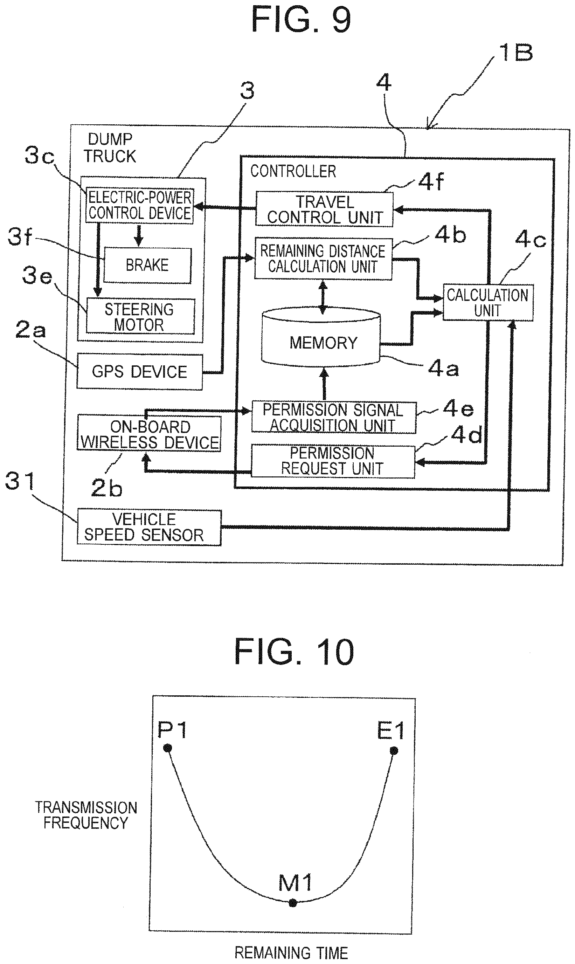

FIG. 9 is a schematic configuration diagram illustrating a dump truck 1B used in a control system according to a third embodiment of the present invention. This third embodiment is different from the aforementioned first embodiment in that the transmission frequency of transmitting the travel permission request signal is changed in accordance with the remaining distance a in the block section S1, S2, ..., Sn in the first embodiment, whereas the transmission frequency of transmitting the travel permission request signal is changed in accordance with a remaining time until arrival at the emergency stop point E1, E2, ..., En in the block section S1, S2, ..., Sn in the third embodiment. In this third embodiment, portions which are the same as or corresponding to the portions in the first and second embodiments are labeled with the same reference signs.

### <Configuration>

In this third embodiment, the dump truck 1B is provided with a vehicle speed sensor 31 that is a speed detection unit for detecting a travel speed of the vehicle body 1a, as illustrated in FIG. 9. Information on the vehicle speed detected by the vehicle speed sensor 31 is input to the calculation unit 4c. The calculation unit 4c calculates a required time for reaching the emergency stop point E1 in the block section S1 in which the dump truck 1B is currently traveling based on the vehicle speed information input thereto and the remaining distance information, as the remaining time.

The calculation unit 4c also calculates a transmission interval of a travel permission request signal based on a request frequency table predetermined in accordance with the remaining time. In the case where, until passage through the emergency stop point E1 in the block station S1 where the dump truck 1B is traveling, the travel permission signal cannot be received within a predetermined period of time after transmission of the travel permission request signal, the calculation unit 4c calculates the remaining time again based on the vehicle speed information and the remaining distance information.

The request frequency table is set in such a manner that, as the remaining time until arrival at the emergency stop point E1, E2, ..., En in each block section S1, S2, ..., Sn decreases, the transmission interval becomes shorter. According to the request frequency table, the first transmission is performed when the dump truck 1B passes through the permission request start point P1, the second transmission is performed when a remaining time calculated by the calculation unit 4c becomes a half of a remaining time at the time of passing through this permission request start point, and the third, fourth, fifth,... transmissions are performed sequentially when the remaining time decreases by half, i.e., the remaining time becomes 1/4, 1/8, 1/16, .... That is, the request frequency table is set to increase the transmission frequency by reducing the transmission interval in proportional to the decrease of the remaining time.

### <Operations and Effects>

In the above-described manner, the dump truck 1B used in the control system according to the third embodiment is configured to reduce the transmission interval of transmitting the travel permission request signal in accordance with the reduction of the remaining time until arrival at the emergency stop point E1, E2, ..., En in each block section S1, S2, ..., Sn and, in the case where the travel permission signal cannot be received before a predetermined time passes after transmission of the travel permission request signal, calculate again the remaining time.

Consequently, it is possible to transmit the travel permission request signal in accordance with the travel position in each block section S1, S2, ..., Sn. In addition, in the case where the travel permission signal has been able to be acquired, transmission of the travel permission request signal is stopped, thereby the number of transmissions of the travel permission request signal can be reduced. Thus, the transmission amount of information associated with transmissions of travel permission request signals can be reduced. In particular, it is possible to increase the number of transmissions of the travel permission request signal immediately before the emergency stop point E1, E2, ..., En, thus increasing possibility (probability) of acquiring the travel permission signal transmitted from the control center 11 in response to the transmitted travel permission request signal.

### [Fourth Embodiment]

FIG. 10 is a graph showing a transmission frequency with respect to a remaining time until the dump truck 1 reaches the emergency stop point E1 in the block section S1 in a control system according to a fourth embodiment of the present invention. This fourth embodiment is different from the aforementioned third embodiment in that the transmission frequency of transmitting the travel permission request signal is increased with decrease of the remaining time until arrival at the emergency stop point E1, E2, ..., En in the third embodiment, whereas the transmission frequency of the travel permission request signal is increased immediately after the permission request start point P1, P2, ..., Pn and immediately before the emergency stop point E1, E2, ..., En in each block section S1, S2, ..., Sn in the fourth embodiment. In this fourth embodiment, portions which are the same as or corresponding to the portions in the first to third embodiments are labeled with the same reference signs.

### <Configuration>

In this fourth embodiment, the calculation unit 4c calculates a transmission interval of transmitting a travel permission request signal based on a request frequency table predetermined in accordance with the calculated remaining time. As illustrated in FIG. 10, the request frequency table is set in such a manner that the transmission interval at the permission request start point P1, P2, ..., Pn and that at the emergency stop point E1, E2, ..., En in each block section S1, S2, ..., Sn are high, the transmission interval at a halfway point M1, M2, ..., Mn located approximately halfway between the permission request start point P1, P2, ..., Pn and the emergency stop point E1, E2, ..., En is lowest, and the transmission frequencies are set to connect that at the permission request start point P1, P2, ..., Pn, that at the halfway point M1, M2, ..., Mn, and that at the emergency stop point E1, E2, ..., En smoothly in a parabolic manner. That is, the request frequency table is set in such a manner that the transmission frequencies gradually decrease from the permission request point P1, P2, ..., Pn to the halfway point M1, M2, ..., Mn with reduction of the remaining time, and gradually increase from the halfway point M1, M2, ..., Mn to the emergency stop point E1, E2, ..., En with the reduction of the remaining time.

### <Operations and Effects>

In the above-described manner, as illustrated in FIG. 10, the dump truck 1 used in the control system according to the fourth embodiment is configured in such a manner that the transmission frequencies are set to be high at the permission request start point P1, P2, ..., Pn and the emergency stop point E1, E2, ..., En in each block section S1, S2, ..., Sn, gradually decrease from the permission request start point P1, P2, ..., Pn to the halfway point M1, M2, ..., Mn, and gradually increase from the halfway point M1, M2, ..., Mn to the emergency stop point E1, E2, ..., En. Consequently, in the case where the travel permission signal has been acquired, transmission of the travel permission request signal is stopped, so that the transmission amount of information associated with transmissions of travel permission request signals can be reduced.

In particular, the transmission frequency of the travel permission request signal is set to be high immediately after the permission request start point E1, E2, ..., En. Therefore, it is possible to increase the possibility that the travel permission signal can be acquired immediately after transmission of the travel permission request signal is started, resulting in further reduction of the amount of transmitted information. Also, the transmission frequency of the travel permission request signal is set to be high immediately before the emergency stop point E1, E2, ..., En. Therefore, even in the case where the signal transmission/reception status (radio wave state) around the emergency stop point E1, E2, ..., En is not good, it is possible to increase the possibility of acquiring the travel permission signal before the emergency stop point E1, E2, ..., En (the probability of success in communication).

### [Fifth Embodiment]

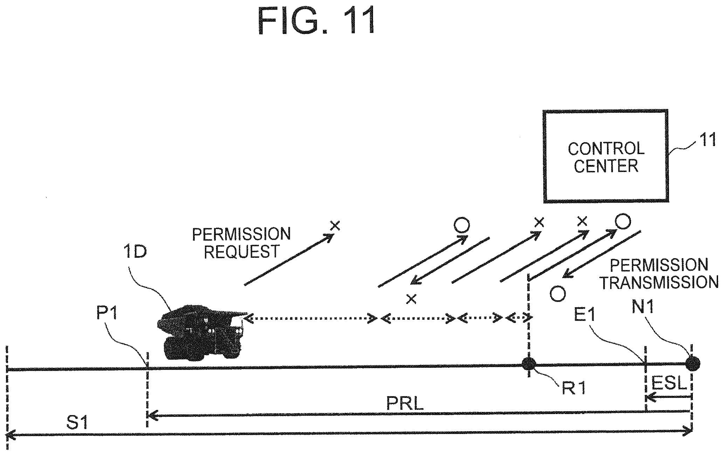

FIG. 11 illustrates communication between a dump truck 1D and the control center 11 in a control system according to a fifth embodiment of the present invention. This fifth embodiment is different from the aforementioned first embodiment in that the transmission frequency of transmitting the travel permission request signal is changed in accordance with the remaining distance a in the block section S1, S2, ..., Sn in the first embodiment, whereas transmission points R1, R2, ..., Rn of travel permission request signals for which acquisitions of travel permission signals are successful are stored in the memory 4a and the travel permission request signal is transmitted at the time of passing through those transmission points R1, R2, ..., Rn again in the fifth embodiment. In this fifth embodiment, portions which are the same as or corresponding to the portions in the first embodiment are labeled with the same reference signs.

### <Configuration>

In this fifth embodiment, in the case where the calculation unit 4c has been able to acquire the travel permission signal information from the memory 4a, the calculation unit 4c calculates a transmission location R1, R2, ..., Rn that is a travel position at the time of transmission of the travel permission request signal for which the travel permission signal information has been able to be acquired (i.e., a point of requesting the travel permission signal) from position information in remaining distance information output from the remaining distance calculation unit 4b, map information and travel-permission section information stored in the memory 4a, and the like, and stores information related to the transmission location R1, R2, ..., Rn at which communication is successful in each block section S1, S2, ..., Sn in the memory 4a as communication history information. The calculation unit 4c determines whether a block section is the block section S1, S2, ..., Sn for which the transmission location R1, R2, ..., Rn is stored based on the remaining distance information calculated by the remaining distance calculation unit 4b, and the map information, the travel-permission section information, and the communication history information stored in the memory 4a, for example. While the dump truck 1D travels in the block section S1, S2, ..., Sn for which the transmission location R1, R2, ..., Rn is stored, the calculation unit 4c causes the travel permission request signal to be transmitted when the dump truck 1D passes through the transmission location R1, R2, ..., Rn in this block section S1, S2, ..., Sn.

### <Operations and Effects>

In the above-described manner, the dump truck 1D used in the control system according to the fifth embodiment is configured in such a manner that, while the dump truck 1D travels in each block section S1, S2, ..., Sn, the transmission location R1, R2, ..., Rn of the travel permission request signal for which the travel permission signal information has been able to be acquired is stored in the memory 4a and, while the dump truck 1D travels again in the block section S1, S2, ..., Sn for which the transmission location R1, R2, ..., Rn is stored, the travel permission request signal is transmitted at the time of passing through the transmission location R1, R2, ..., Rn in this block section S1, S2, ..., Sn. That is, the travel permission request signal is transmitted at the transmission location R1, R2, ..., Rn for which the travel permission signal could be acquired formerly, based on the past communication history information. Therefore, the transmission amount of information associated with transmissions of travel permission request signals can be reduced. Also, it is possible to increase the probability of success in communication in which the travel permission request signal is transmitted and the travel permission signal is received.

### [Others]

The present invention is not limited to the aforementioned embodiments, but includes various modifications. For example, the aforementioned embodiments are described for intelligible explanation of the present invention, but the present invention are not intended to be limited to forms including all the described components.

The control systems according to the above-described embodiments are described by using the unmanned traveling dump trucks 1 to 1D as examples. However, the present invention is not limited thereto. Manned traveling dump trucks that can be operated to travel by an operator can be used. Further, the controller may not be mounted on the dump truck. Furthermore, the travel permission communication method in the control system according to the present invention can be also used for a work vehicle other than the dump truck 1, such as a railroad system.

In each of the above embodiments, the transmission interval of transmitting the travel permission request signal is changed in accordance with the remaining distance a or the remaining time to the emergency stop point E1, E2, ..., En in each block section S1, S2, ..., Sn. However, a radio wave intensity (a communication output) of the travel permission request signal transmitted from the on-board wireless device 2b may be changed in accordance with the remaining distance a or the remaining time. Further, the travel permission request distance PRL in each block section S1, Ss, ..., Sn may be equal between the dump trucks 1 to 1D operated in the mine, or may be made different in accordance with the performances of the dump trucks 1 to 1D, for example.

Although the transmission interval is set to be high at the permission request start point P1, P2, ..., Pn and the emergency stop point E1, E2, ..., En in each block section S1, S2, ..., Sn in the above fourth embodiment, the transmission interval may be set to be high only at the emergency stop point E1, E2, ..., En for the purpose of improving the probability of success in communication before the emergency stop point E1, E2, ..., En, for example.

### REFERENCE SIGNS LIST:

- 1: Dump truck (work vehicle)
- 1a: Vehicle body
- 2a: GPS device (position detection unit)
- 2b: On-board wireless device (communication unit)
- 3: Travel driving device
- 3f: Brake (braking device)
- 4: Controller (on-board controller)
- 4a: Memory
- 4b: Remaining distance calculation unit
- 4c: Calculation unit (Control unit)
- 4d: Permission request unit
- 4e: Permission signal acquisition unit
- 4f: Travel control unit
- 11: Control center

## Claims

1. A work vehicle control system comprising:
a control center (11) configured to transmit/receive predetermined information including a travel permission request signal and a travel permission signal to/from a plurality of work vehicles and control travel of the work vehicles;
a work vehicle including an on-board wireless controller (4d, 4e), the on-board wireless controller (4d, 4e) being configured to transmit and receive the predetermined information;
a GPS device (2a) configured to detect a travel position of the work vehicle,
an on-board communication controller (4c), coupled to the on-board wireless controller (4d, 4e) and the GPS device (2a) respectively, and configured to, while the work vehicle travels in a predetermined first block section (S1) of a travel path on which the work vehicle is to travel, transmit a travel permission request signal to the control center (11) for requesting a travel permission signal from the control center (11) that permits travel in a second block section (S2) of the travel path located next to the first block section via the on-board wireless controller (4d, 4e),
the on-board communication controller (4c) being configured to, when the travel position indicates that the work vehicle is traveling in the first block section (S1), change an interval of transmission of the travel permission request signal in accordance with a distance from a predetermined position in the first block section (S1), located ahead of the work vehicle,
the work vehicle includes a brake (3f) configured to brake travel of the work vehicle, and
the on-board communication controller (4c) is further configured to determine an emergency stop point (E1, E2, ..., En) in each block section (S1, S2, ..., Sn) so that the brake (3f) is capable of braking the work vehicle to a stop between the emergency stop point (E1, E2, ..., En) and a termination point (N1) of the block section and to change the interval of transmission of the travel permission request signal so as to reduce the transmission interval in proportion to a decrease of remaining distance from the emergency stop point.

2. The work vehicle control system according to claim 1, wherein
the on-board communication controller (4c) is further configured to, when the travel position indicates that the work vehicle has reached the emergency stop point (E1) of the first block section (S1), and a permission signal from the control center (11) has not been received, actuate the brake (3f) and cause the work vehicle to stop before reaching the termination point.

3. The work vehicle control system according to claim 1 or 2, wherein
the on-board communication controller (4c) is further configured to, when the travel position indicates that the work vehicle has reached the emergency stop point (E1) of the first block section (S1), and a permission signal from the control center (11) has been received, cause the work vehicle to travel past the termination point into the second block section (S2) of the travel path.

4. A work vehicle control system comprising:
a control center (11) configured to transmit/receive predetermined information including a travel permission request signal and a travel permission signal to/from a plurality of work vehicles and control travel of the work vehicles;
a work vehicle including an on-board wireless controller(4d 4e), the on-board wireless controller (4d, 4e) being configured to transmit and receive the predetermined information;
a GPS device (2a) configured to detect a travel position of the work vehicle; and
an on-board communication controller (4c), coupled to the on-board wireless controller (4d, 4e) and the GPS device (2a) respectively, and configured to, while the work vehicle travels in a predetermined first block section (S1) of a travel path, transmit a travel permission request signal to the control center (11) for requesting a travel permission signal from the control center (11) that permits travel in a second block section (S2) of the travel path located next to the first block section (S1) via the on-board wireless controller (4d, 4e),
the on-board communication controller (4c) being configured to, when the travel position indicates that the work vehicle is traveling in the first block section (S1), change an interval of transmission of the travel permission request signal in accordance with a remaining time to an emergency stop point (E1) located ahead in a predetermined traveling direction of the work vehicle in the first block section (S1),
the work vehicle includes a brake (3f) configured to brake travel of the work vehicle, and
the on-board communication controller (4c) is further configured to determine an emergency stop point (E1, E2, ..., En) in each block section (S1, S2, ..., Sn) so that the brake (3f) is capable of braking the work vehicle to a stop between the emergency stop point (E1, E2, ..., En) and a termination point (NI) of the block section and to reduce the interval of transmission of the travel permission request signal as the remaining time until arrival at the emergency stop point (E1,E2, ... En) in each block section (S1, S2, ..., Sn) decreases.

5. The work vehicle control system according to claim 4, wherein the on-board communication controller (4c) is further configured to:
set the frequency of transmission of the travel permission request signal at a halfway point (M1, M2, M, Mn) located approximately halfway between a permission request start point (P1, P2, ..., Pn) and the emergency stop point E1, E2, ..., En lower than before and after the halfway point.

6. The work vehicle control system according to claim 5, wherein the decrease is parabolic.

7. The work vehicle control system according to claim 5, wherein the increase is parabolic.

## Patentansprüche

1. Steuerungssystem für ein Arbeitsfahrzeug, umfassend:
eine Steuerungszentrale (11), die ausgestaltet ist, um vorbestimmte Informationen an eine Vielzahl von Arbeitsfahrzeugen zu senden und von diesen zu empfangen, wobei die Informationen ein Fahrerlaubnis-Anforderungssignal und ein Fahrerlaubnissignal umfassen, und um das Fahren der Arbeitsfahrzeuge zu steuern;
ein Arbeitsfahrzeug, das einen fahrzeugeigenen drahtlosen Controller (4d, 4e) beinhaltet, wobei der fahrzeugeigene drahtlose Controller (4d, 4e) ausgestaltet ist, um die vorbestimmten Informationen zu senden und zu empfangen;
eine GPS-Vorrichtung (2a), die ausgestaltet ist, um eine Fahrposition des Arbeitsfahrzeugs zu detektieren,
einen fahrzeugeigenen Kommunikationscontroller (4c), der jeweils mit dem fahrzeugeigenen drahtlosen Controller (4d, 4e) und mit der GPS-Vorrichtung (2a) gekoppelt ist und ausgestaltet ist, um, während das Arbeitsfahrzeug in einem vorbestimmten ersten Blockabschnitt (S1) einer Fahrstrecke fährt, auf der das Arbeitsfahrzeug fahren soll, ein Fahrerlaubnis-Anforderungssignal über den fahrzeugeigenen drahtlosen Controller (4d, 4e) an die Steuerungszentrale (11) zu senden, um ein Fahrerlaubnissignal von der Steuerungszentrale (11) anzufordern, das das Fahren in einem zweiten Blockabschnitt (S2) der Fahrstrecke erlaubt, der an den ersten Blockabschnitt anschließt,
wobei der fahrzeugeigene Kommunikationscontroller (4c) ausgestaltet ist, um, wenn die Fahrposition anzeigt, dass das Arbeitsfahrzeug gerade in dem ersten Blockabschnitt (S1) fährt, ein Sendeintervall des Fahrerlaubnis-Anforderungssignals in Übereinstimmung mit einer Distanz von einer vorbestimmten Position in dem ersten Blockabschnitt (S1) zu verändern, die sich vor dem Arbeitsfahrzeug befindet,
wobei das Arbeitsfahrzeug eine Bremse (3f) beinhaltet, die ausgestaltet ist, um die Fahrt des Arbeitsfahrzeugs zu bremsen, und
wobei der fahrzeugeigene Kommunikationscontroller (4c) ferner ausgestaltet ist, um einen Nothaltepunkt (E1, E2, ..., En) in jedem Blockabschnitt (S1, S2, ..., Sn) so zu bestimmen, dass die Bremse (3f) zum Bremsen des Arbeitsfahrzeugs bis zum Anhalten zwischen dem Nothaltepunkt (E1, E2, ..., En) und einem Endpunkt (N1) des Blockabschnitts in der Lage ist, und um das Sendeintervall des Fahrerlaubnis-Anforderungssignals zu verändern, um das Sendeintervall im Verhältnis zu einer Verringerung der verbleibenden Distanz vom Nothaltepunkt zu reduzieren.

2. Steuerungssystem für ein Arbeitsfahrzeug nach Anspruch 1, wobei
der fahrzeugeigene Kommunikationscontroller (4c) ferner ausgestaltet ist, um, wenn die Fahrposition anzeigt, dass das Arbeitsfahrzeug den Nothaltepunkt (E1) des ersten Blockabschnitts (S1) erreicht hat und kein Erlaubnissignal von der Steuerungszentrale (11) empfangen worden ist, die Bremse (3f) zu betätigen und zu veranlassen, dass das Arbeitsfahrzeug stoppt, bevor der Endpunkt erreicht wird.

3. Steuerungssystem für ein Arbeitsfahrzeug nach Anspruch 1 oder 2, wobei
der fahrzeugeigene Kommunikationscontroller (4c) ferner ausgestaltet ist, um, wenn die Fahrposition anzeigt, dass das Arbeitsfahrzeug den Nothaltepunkt (E1) des ersten Blockabschnitts (S1) erreicht hat und ein Erlaubnissignal von der Steuerungszentrale (11) empfangen worden ist, zu veranlassen, dass das Arbeitsfahrzeug an dem Endpunkt vorbei in den zweiten Blockabschnitt (S2) der Fahrstrecke fährt.

4. Steuerungssystem für ein Arbeitsfahrzeug, umfassend:
eine Steuerungszentrale (11), die ausgestaltet ist, um vorbestimmte Informationen an eine Vielzahl von Arbeitsfahrzeugen zu senden und von diesen zu empfangen, wobei die Informationen ein Fahrerlaubnis-Anforderungssignal und ein Fahrerlaubnissignal beinhalten, und um das Fahren der Arbeitsfahrzeuge zu steuern;
ein Arbeitsfahrzeug, das einen fahrzeugeigenen drahtlosen Controller (4d, 4e) beinhaltet, wobei der fahrzeugeigene drahtlose Controller (4d, 4e) ausgestaltet ist, um die vorbestimmten Informationen zu senden und zu empfangen;
eine GPS-Vorrichtung (2a), die ausgestaltet ist, um eine Fahrposition des Arbeitsfahrzeugs zu detektieren; und
einen fahrzeugeigenen Kommunikationscontroller (4c), der jeweils mit dem fahrzeugeigenen drahtlosen Controller (4d, 4e) und mit der GPS-Vorrichtung (2a) gekoppelt ist und ausgestaltet ist, um, während das Arbeitsfahrzeug in einem vorbestimmten ersten Blockabschnitt (S1) einer Fahrstrecke fährt, ein Fahrerlaubnis-Anforderungssignal über den fahrzeugeigenen drahtlosen Controller (4d, 4e) an die Steuerungszentrale (11) zu senden, um ein Fahrerlaubnissignal von der Steuerungszentrale (11) anzufordern, das das Fahren in einem zweiten Blockabschnitt (S2) der Fahrstrecke erlaubt, der an den ersten Blockabschnitt (S1) anschließt,
wobei der fahrzeugeigene Kommunikationscontroller (4c) ausgestaltet ist, um, wenn die Fahrposition anzeigt, dass das Arbeitsfahrzeug gerade in dem ersten Blockabschnitt (S1) fährt, ein Sendeintervall des Fahrerlaubnis-Anforderungssignals in Übereinstimmung mit einer verbleibenden Zeit bis zu einem Nothaltepunkt (E1) zu verändern, der sich in einer vorbestimmten Fahrtrichtung des Arbeitsfahrzeugs in dem ersten Blockabschnitt (S1) voraus befindet,
wobei das Arbeitsfahrzeug eine Bremse (3f) beinhaltet, die ausgestaltet ist, um eine Fahrt des Arbeitsfahrzeugs zu bremsen, und
wobei der fahrzeugeigene Kommunikationscontroller (4c) ferner ausgestaltet ist, um einen Nothaltepunkt (E1, E2, ..., En) in jedem Blockabschnitt (S1, S2, ..., Sn) so zu bestimmen, dass die Bremse (3f) in der Lage ist, das Arbeitsfahrzeug bis zum Anhalten zwischen dem Nothaltepunkt (E1, E2, ..., En) und einem Endpunkt (N1) des Blockabschnitts zu bremsen und um das Sendeintervall des Fahrerlaubnis-Anforderungssignals zu ändern, wenn die verbleibende Zeit bis zur Ankunft bei dem Nothaltepunkt (E1, E2, ..., En) in jedem Blockabschnitt (S1, S2, ..., Sn) abnimmt.

5. Steuerungssystem für ein Arbeitsfahrzeug nach Anspruch 4, wobei der fahrzeugeigene Kommunikationscontroller (4c) ferner ausgestaltet ist, um:
die Sendefrequenz des Fahrerlaubnis-Anforderungssignals auf einen Punkt (M1, M2, M, Mn) auf halber Strecke, der sich in etwa auf halber Strecke zwischen einem Erlaubnisanforderungs-Startpunkt (P1, P2, ..., Pn) und dem Nothaltepunkt E1, E2, ..., En befindet, niedriger einzustellen als vor und nach dem Punkt auf halber Strecke.

6. Steuerungssystem für ein Arbeitsfahrzeug nach Anspruch 5, wobei die Abnahme parabolisch ist.

7. Steuerungssystem für ein Arbeitsfahrzeug nach Anspruch 5, wobei die Zunahme parabolisch ist.

## Revendications

1. Système de commande pour véhicule de chantier comprenant :
un centre de commande (11) configuré pour émettre/recevoir des informations prédéterminées incluant un signal de requête de permission de circulation et un signal de permission de circulation vers/depuis une pluralité de véhicules de chantier et pour commander le déplacement des véhicules de chantier ;
un véhicule de chantier incluant un contrôleur sans fil embarqué (4d, 4e), le contrôleur sans fil embarqué (4d, 4e) étant configuré pour émettre et recevoir les informations prédéterminées ;
un dispositif GPS (2a) configuré pour détecter une position de circulation du véhicule de chantier,
un contrôleur de communication embarqué (4c), couplé au contrôleur sans fil embarqué (4d, 4e) et au dispositif GPS (2a) respectivement, et configuré, alors que le véhicule de chantier circule dans une première section de bloc prédéterminé (S1) d'un trajet de circulation sur lequel le véhicule de chantier est destiné à circuler, pour émettre un signal de requête de permission de circulation vers le centre de commande (11) pour requérir un signal de permission de circulation depuis le centre de commande (11) qui permet la circulation dans une seconde section de bloc (S2) du trajet de circulation située à la suite de la première section de bloc via le contrôleur sans fil embarqué (4d, 4e),
le contrôleur de communication embarqué (4c) étant configuré, quand la position de circulation indique que le véhicule de chantier circule dans la première section de bloc (S1), pour changer un intervalle de transmission du signal de requête de permission de circulation en accord avec une distance depuis une position prédéterminée dans la première section de bloc (S1), située en avant du véhicule de chantier,
le véhicule de chantier inclut un frein (3f) configuré pour freiner la circulation du véhicule de chantier, et
le contrôleur de communication embarqué (4c) est en outre configuré pour déterminer un point d'arrêt d'urgence (E1, E2, ..., En) dans chaque section de bloc (S1, S2, ..., Sn) de sorte que le frein (3f) est capable de freiner le véhicule de chantier à un arrêt entre le point d'arrêt d'urgence (E1, E2, ..., En) et un point de terminaison (N1) de la section de bloc et pour changer l'intervalle de transmission du signal de requête de permission de circulation de manière à réduire l'intervalle de transmission en proportion à une diminution de la distance restante depuis le point d'arrêt d'urgence.

2. Système de commande pour véhicule de chantier selon la revendication 1, dans lequel
le contrôleur de communication embarqué (4c) est en outre configuré, quand la position de circulation indique que le véhicule de chantier a atteint le point d'arrêt d'urgence (E1) de la première section de bloc (S1), et qu'un signal de permission n'a pas été reçu depuis le centre de commande (11), pour actionner le frein (3f) et amener le véhicule de chantier à s'arrêter avant d'atteindre le point de terminaison.

3. Système de commande pour véhicule de chantier selon la revendication 1 ou 2, dans lequel
le contrôleur de communication embarqué (4c) est en outre configuré, quand la position de circulation indique que le véhicule de chantier a atteint le point d'arrêt d'urgence (E1) de la première section de bloc (S1), et qu'un signal de permission a été reçu depuis le centre de commande (11), pour amener le véhicule de chantier à circuler au-delà du point de terminaison jusque dans la seconde section de bloc (S2) du trajet de circulation,

4. Système de commande pour véhicule de chantier comprenant :
un centre de commande (11) configuré pour émettre/recevoir des informations prédéterminées incluant un signal de requête de permission de circulation et un signal de permission de circulation vers/depuis une pluralité de véhicules de chantier et pour commander la circulation des véhicules de chantier ;
un véhicule de chantier incluant un contrôleur sans fil embarqué (4d, 4e), le contrôleur sans fil embarqué (4d, 4e) étant configuré pour émettre et recevoir les informations prédéterminées ;
un dispositif GPS (2a) configuré pour détecter une position de circulation du véhicule de chantier, et
un contrôleur de communication embarqué (4c), couplé au contrôleur sans fil embarqué (4d, 4e) et au dispositif GPS (2a) respectivement, et configuré, alors que le véhicule de chantier circule dans une première section de bloc prédéterminée (S1) d'un trajet de circulation, pour émettre un signal de requête de permission de circulation vers le centre de commande (11) pour requérir un signal de permission de circulation depuis le centre de commande (11) qui permet de circuler dans une seconde section de bloc (S2) du trajet de circulation située à la suite de la première section de bloc (S1) via le contrôleur sans fil embarqué (4d, 4e),
le contrôleur de communication embarqué (4c) étant configuré, quand la position de circulation indique que le véhicule de chantier est en train de circuler dans la première section de bloc (S1), pour changer un intervalle de transmission du signal de requête de permission de circulation en accord avec un temps restant jusqu'à un point d'arrêt d'urgence (E1) situé en avant dans une direction de circulation prédéterminée du véhicule de chantier dans la première section de bloc (S1),
le véhicule de chantier inclut un frein (3f) configuré pour freiner la circulation du véhicule de chantier, et
le contrôleur de communication embarqué (4c) est en outre configuré pour déterminer un point d'arrêt d'urgence (E1, E2, ..., En) dans chaque section de bloc (S1, S2, ..., Sn) de sorte que le frein (3f) est capable de freiner le véhicule de chantier à un arrêt entre le point d'arrêt d'urgence (E1, E2, ..., En) et un point de terminaison (NI) de la section de bloc et pour réduire l'intervalle de transmission du signal de requête de permission de circulation lorsque le temps restant jusqu'à l'arrivée au point d'arrêt d'urgence (E1, E2, ..., En) dans chaque section de bloc (S1, S2, ..., Sn) diminue.

5. Système de commande pour véhicule de chantier selon la revendication 4, dans lequel le contrôleur de communication embarqué (4c) est en outre configuré pour :
établir la fréquence de transmission du signal de requête de permission de circulation à un point de mi-chemin (M1, M2, M, Mn) situé approximativement à mi-chemin entre un point de départ de requête de permission (P1, P2, ..., Pn) et le point d'arrêt d'urgence (E1, E2, ..., En) à une valeur inférieure par rapport à avant et après le point à mi-chemin.

6. Système de commande pour véhicule de chantier selon la revendication 5, dans lequel la diminution est parabolique.

7. Système de commande pour véhicule de chantier selon la revendication 5, dans lequel l'augmentation est parabolique.
